# DEMANDE DE BREVET EUROPEEN

(11) **EP 1 514 465 A1**
(43) Date de publication de la demande: **16.03.2005**
(21) Numéro de dépôt: 04300578.4
(22) Date de dépôt: 07.09.2004
(51) Int. Cl.: A01B 73/04, A01C 15/00

(54) **Semoir monograine**

(30) Priorité: 12.09.2003 FR 0310771
(71) Demandeur: Kuhn-Nodet S.A., 77876 Montereau (FR)
(72) Inventeur: Audigie, Jean-Charles, 89340, Villeneuve la Guyard (FR)
(74) Mandataire: Andres, Jean-Claude

(57) **Abrégé**

La présente invention se rapporte à un semoir monograine huit rangs (1) avec un châssis (4) comportant :
- une poutre transversale (7) sensiblement horizontale sur laquelle sont répartis en travail de manière régulière huit éléments semeur (6), ladite poutre transversale (7) étant composée :
   ■ d'un tronçon central (15) solidaire dudit châssis (4) et supportant au moins deux éléments semeur (6b à 6g), et
   ■ de deux tronçons latéraux (16) disposés de part et d'autre dudit tronçon central (15) dans une position de travail, chaque tronçon latéral (16) supportant au moins un élément semeur (6a, 6h) et étant destiné à être replié vers le haut dans une position de transport au moyen d'un mécanisme d'articulation (17) ;
   et
- une trémie centrale (20) présentant une ouverture (26) vers le haut et une largeur limitée par le gabarit routier, ladite trémie centrale (20) étant disposée transversalement sur ledit châssis (4).

Ladite invention est remarquable en ce que dans la position de transport, lesdits éléments semeur (6a, 6h) solidaire desdits tronçons latéraux (16) sont disposés au moins partiellement de part et d'autre de ladite ouverture (26) pour libérer l'espace et accéder à ladite trémie centrale (20).

## Description

La présente invention se rapporte au domaine technique générale du machinisme agricole. Elle trouve tout particulièrement son application dans le domaine du semoir monograine.
Ledit semoir monograine huit rangs avec un châssis comportant :
- une poutre transversale sensiblement horizontale sur laquelle sont répartis en travail de manière régulière huit éléments semeur, ladite poutre transversale étant composée :
   ■ d'un tronçon central solidaire dudit châssis et supportant au moins deux éléments semeur, et
   ■ de deux tronçons latéraux disposés de part et d'autre dudit tronçon central dans une position de travail, chaque tronçon latéral supportant au moins un élément semeur et étant destiné à être replié vers le haut dans une position de transport au moyen d'un mécanisme d'articulation ;
   et
- une trémie centrale présentant une ouverture vers le haut et une largeur limitée par le gabarit routier, ladite trémie centrale étant disposée transversalement sur ledit châssis.

Un tel semoir est connu de l'homme du métier par l'intermédiaire du document **DE 87 06 974 U**. Ce semoir monograine connu est monté sur des roues et comprend un châssis muni de points d'attelage pour être attelé à un tracteur. Ledit châssis comporte une poutre transversale sur laquelle des éléments semeur sont placés l'un à côté de l'autre. Ladite poutre transversale comprend un tronçon central fixe lié audit châssis et deux tronçons latéraux placés en dehors du gabarit routier de 3 mètres. Les tronçons latéraux sont destinés à être repliés vers le haut et vers le centre pour le transport. Ce semoir comprend aussi un dispositif de fertilisation avec une trémie centrale pour le stockage de granulés disposée transversalement sur le châssis. L'encombrement en largeur de la trémie centrale est limité par la largeur de transport.

Dans ce document, il s'agit d'un semoir comportant six éléments semeur dont quatre sont liés au tronçon central fixe. Les tronçons latéraux supportent chacun un élément semeur et sont repliés, pour le transport, directement derrière ladite trémie centrale.

Cette trémie centrale n'est donc pas accessible lorsque le semoir se trouve dans sa position de transport pour un approvisionnement en granulés par sacs. Elle peut être approvisionnée par contre par une vis de chargement mais il faudra préalablement que l'utilisateur enlève le couvercle de la trémie centrale. L'accès au couvercle est possible mais pénible du fait que les éléments semeur des tronçons latéraux sont repliés à l'arrière et vers le centre de ladite trémie centrale.

Actuellement, les exploitations agricoles grandissent et ainsi la distance de la ferme au champ et la distance de champ à champ augmente. Dans un souci de productivité, les matériels deviennent de plus en plus grands, leur largeur de travail est souvent augmentée. Les grandes exploitations ont surtout recours au matériel repliable par vérins hydrauliques pour palier à l'encombrement en largeur pour le transport sur route. Dans le cas particulier des semoirs, c'est un aspect d'augmenter la largeur de travail mais il faut également augmenter l'autonomie du semoir. Pour augmenter l'efficacité du chantier semis il faut ainsi accroître la capacité des dispositifs de stockage tels que les trémies contenant la semence et le fertilisant afin limiter les arrêts ravitaillement pour les différentes trémies.

L'objet de la présente invention vise à remédier aux inconvénients de l'état de la technique. Elle doit notamment proposer un semoir dont la trémie est facilement accessible dans la position repliée de transport. Ce semoir devra aussi garantir des débits de chantier importants (grande largeur de travail et capacité de stockage élevée) ainsi qu'une mise en oeuvre du repliage facile.

Les objets assignés à la présente invention sont atteints à l'aide d'un semoir caractérisé en ce que dans la position de transport, lesdits éléments semeur solidaire desdits tronçons latéraux sont disposés au moins partiellement de part et d'autre de ladite ouverture pour libérer l'espace et accéder à ladite trémie centrale.

D'autres caractéristiques de l'invention apparaîtront encore dans les sous-revendications et dans la description suivante d'un exemple de réalisation non limitatif de l'invention représenté sur les dessins annexés sur lesquels :
- la **figure 1** représente un exemple de réalisation, selon une vue de côté d'un semoir conforme à l'invention attelé à un tracteur dans la position de transport ;
- la **figure 2** représente une vue de l'arrière d'un semoir conforme à l'invention dans la position de travail ;
- la **figure 3** représente une vue de l'arrière du semoir de la figure 1 dans la position de transport.

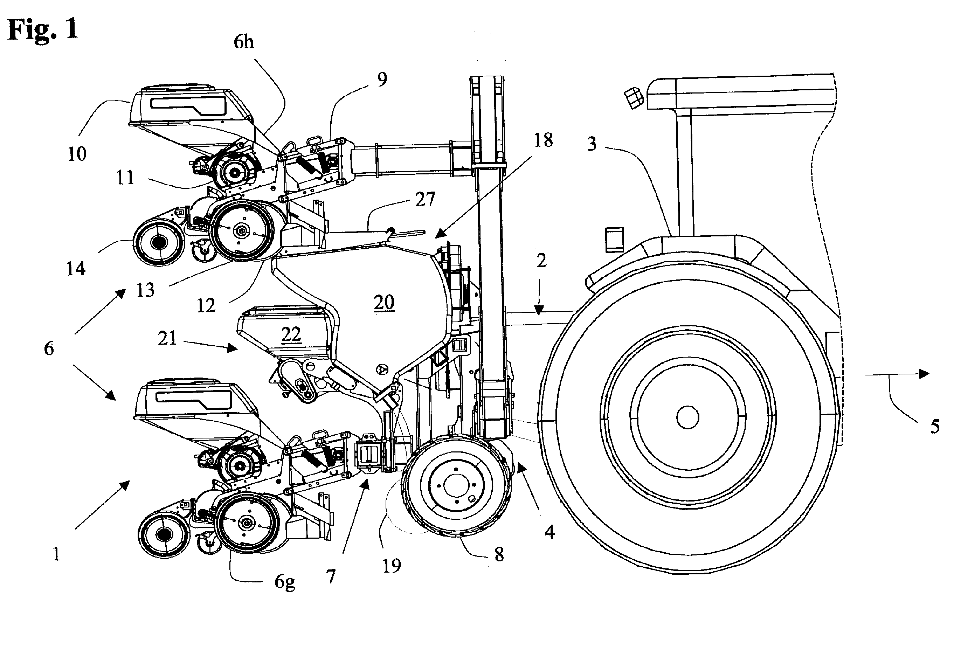

La figure 1 représente, selon une vue latérale, un exemple de réalisation d'une machine agricole conforme à l'invention. La machine agricole représentée sur la figure 1 correspond à un semoir monograine (1) dans sa position de transport. Ce semoir (1) assure un semis individualisé de chacune des graines et selon des rangées bien déterminées.

Telle que représentée sur la figure 1, le semoir monograine (1) est accouplé à l'attelage arrière (2) d'un tracteur (3). Il comporte à cet effet un châssis (4) muni d'un attelage standard pour être relié audit tracteur (3). Lors du travail, ce semoir (1) est déplacé par ledit tracteur (3), suivant une direction et un sens d'avance indiqué par la flèche (5), sur un sol à ensemencer. Ce châssis (4) comporte plusieurs éléments semeur (6) et une poutre (7) disposée sensiblement horizontalement et de manière transversale à la direction d'avance (5). Ladite poutre transversale (7) est soutenue par des roues (8) s'appuyant sur le sol.

Dans la suite de la description, les notions "avant" et "arrière", "devant" et "derrière" sont définies par rapport au sens d'avance (5) et les notions "droite" et "gauche" sont définies en regardant ledit semoir monograine (1) de l'arrière dans ledit sens d'avance (5).

Un tel semoir (1) est aussi appelé communément semoir à éléments. Les différents éléments semeur (6) sont fixés à des intervalles réguliers sur ladite poutre transversale (7) par l'intermédiaire d'une structure de liaison (9) respective. Ladite poutre transversale (7) est de préférence creuse et de section carrée. Pour de tels semoirs (1), il est courant d'avoir des semoirs comportant deux à douze, voire plus d'éléments semeur (6) disposés régulièrement le long de la poutre transversale (7). Chacun d'entre eux comportant une trémie individuelle (10) contenant les graines, un dispositif de dosage (11) et un dispositif d'implantation (12). La semence, initialement contenue dans ladite trémie individuelle (10) est transportée jusqu'au dispositif d'implantation de la semence dans le sol (12) où ladite semence est enfouie dans ledit sol. Le dispositif de dosage (11), quant à lui, permet de régler précisément la quantité de semence déposée en terre. Afin de garantir un dosage homogène en graines, la vitesse de rotation dudit dispositif de dosage (11) est avantageusement proportionnelle à la vitesse d'avance dudit semoir (1). L'élément semeur (6) comporte encore une roue de jauge (13) pour le contrôle de la profondeur de semis. L'élément semeur (6) peut être équipé à l'avant d'un dispositif chasse mottes et à l'arrière d'un dispositif de plombage (14) permettant le rappui de la graine dans le sillon. Les figures illustrent un exemple de réalisation d'un semoir de précision monograine huit rangs.

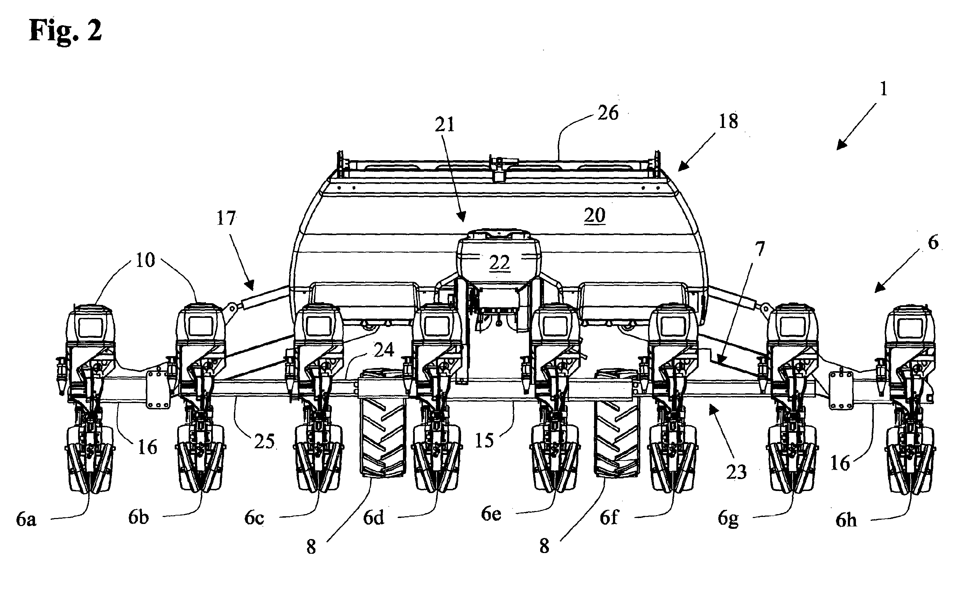

A la lumière de la figure 2 représentant la position de travail dudit semoir monograine (1), on peut voir la répartition régulière des éléments semeur (6) sur la poutre transversale (7). Dans cet exemple de réalisation au travail, la poutre transversale (7) est formée par un tronçon central (15) et par un tronçon latéral (16) disposé au voisinage de chaque extrémité dudit tronçon central (15). Ledit tronçon central (15) est solidaire du châssis (4) et présente une longueur proche de la distance séparant les deux roues d'appui (8) du semoir (1). Le tronçon central (15) supporte au moins deux éléments semeur (6). Les tronçons latéraux (16) sont, pour leur part, disposés au-delà desdites roues (8). Ces derniers sont reliés audit châssis (4) au moyen d'un mécanisme d'articulation (17) et chacun supporte au moins un élément semeur (6).

Ledit semoir monograine (1) représenté à la figure 1, est encore muni d'un dispositif de fertilisation (18) comprenant des enfouisseurs (19) et une trémie centrale de stockage de granulés (20). Un enfouisseur (19) est disposé à l'avant de chaque élément semeur (6) permettant d'enfouir l'engrais dans le sol. La semence contenue dans les trémies individuelles (10) devant être placée dans le voisinage de l'engrais. Le montage d'un tel enfouisseur (19) sur la poutre transversale (7) étant connu par l'homme de l'art, il ne sera donc pas décrit davantage. La trémie centrale (20) est solidaire dudit châssis (4) et est disposée transversalement par rapport à la direction d'avance (5). Les granulés contenus dans ladite trémie centrale (20) sont répartis au moyen d'un système de dosage à cannelures et sont ensuite acheminés jusqu'aux enfouisseurs (19). Ladite trémie centrale (20) étant disposée sensiblement au-dessus desdits enfouisseurs (19) et au plus près de l'avant du châssis (4) afin de réduire le porte-à-faux de l'ensemble du semoir (1). D'une manière préférentielle, ladite trémie centrale (20) présente un encombrement en largeur limité par le gabarit routier. La largeur de la trémie centrale (20) est donc voisine de 3 mètres. Cette trémie centrale (20) permet de contenir une grande quantité de granulés pour alimenter chaque enfouisseur (19) en granulés. Ladite trémie centrale (20) comporte une ouverture (26) destinée au remplissage par le haut. L'enfouisseur (19) placé à l'avant de l'élément semeur (6h) sur la figure 1 n'est pas représenté pour une meilleure clarté.

Cette trémie centrale (20) permet également une parfaite intégration d'un dispositif microgranulateur (21) comportant, entre autres, une trémie (22) pour distribuer de l'insecticide, de l'hélicide ou de l'herbicide. Ladite trémie microgranulateur (22) est montée à l'arrière de ladite trémie centrale (20) et dans la partie médiane de celle-ci comme représenté sur les figures 1 et 2. Un tel dispositif microgranulateur (21) est déjà connu.

Le semoir monograine (1) représenté aux figures est un semoir comportant huit éléments semeur (6a, 6b, 6c, 6d, 6e, 6f, 6g, 6h). Ces huit éléments semeur (6a, 6b, 6c, 6d, 6e, 6f, 6g, 6h) sont répartis sur ladite poutre transversale (7) avec un écart entre les rangs égal à 80 cm si bien que la largeur de l'ensemble du semoir (1) atteint environ 6 mètres. Pour ce type de semoir (1), il est envisageable de régler l'écartement entre les rangs voisins. Même si on se limite à un seul type de céréale tel que le maïs, il est souvent nécessaire de changer la position des éléments semeur (6) pour obtenir des écartements différents, pouvant varier de 70 à 80 cm, selon le type de plantation souhaité.

Comme représenté sur la figure 2, les deux éléments semeur (6d, 6e) sont disposés sur ledit tronçon central (15) en arrière desdites roues d'appui (8) et sensiblement entre celles-ci. Chaque tronçon latéral (16) soutien, quant à lui, un élément semeur (6a, 6h). Lesdits tronçons latéraux (16) sont avantageusement alignés avec ledit tronçon central (15). De tels semoirs (1) sont amenés, plus ou moins régulièrement, à être déplacés sur les routes et les chemins, il est donc nécessaire de réduire leur encombrement en largeur pour le transport afin d'être conforme à la législation routière en vigueur. Ainsi, il est recommandé que l'encombrement en largeur du semoir (1) soit limité à 3 mètres.

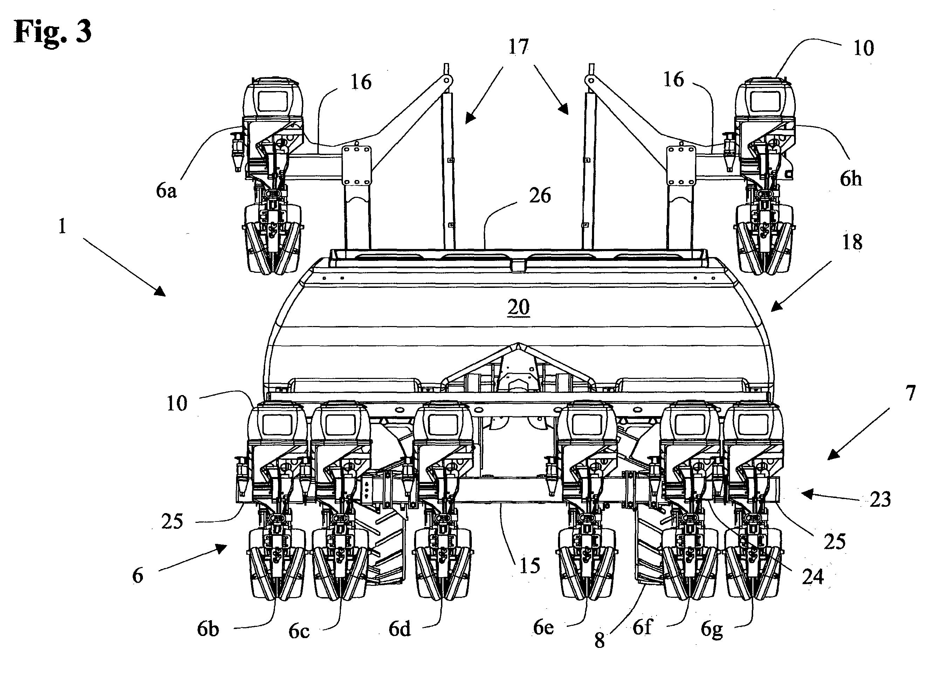

D'après la figure 3 représentant le semoir (1) dans la position de transport, les tronçons latéraux (16) sont repliés vers le haut au moyen dudit mécanisme d'articulation à parallélogramme déformable (17). De sorte que chaque tronçon latéral (16) est déplaçable transversalement et verticalement par rapport audit tronçon central fixe (15) entre deux positions extrêmes, dont l'une est une position de travail (figure 2), dans laquelle le tronçon latéral (16) est sensiblement aligné bout à bout dans le prolongement dudit tronçon central (15), et dont l'autre est une position de transport (figure 3), dans laquelle le tronçon latéral (16) est relevé au-dessus du tronçon central (15). Un tel mécanisme d'articulation (17) est décrit dans le document **FR 2 652 203**.

Selon une caractéristique importante de l'invention, l'espace au-dessus de l'ouverture (26) de ladite trémie centrale (20) est dégagée dans la position de transport. Les éléments semeur (6a, 6h) sont positionnés au moins partiellement de part et d'autre de ladite ouverture (26) pour libérer l'espace et accéder à ladite trémie centrale (20). Cette ouverture (26) permet l'approvisionnement de ladite trémie centrale (20). Le repliage des éléments semeur (6a, 6h) est effectué vers le haut tout en restant sur les côtés de ladite trémie centrale (20) de part et d'autre de ladite ouverture (26). Lesdits éléments semeur (6a, 6h) sont disposés ainsi au plus près des limites du gabarit routier. Cette disposition des éléments semeur (6a, 6h) permet de libérer de l'espace au-dessus de ladite trémie centrale (20). L'utilisateur peut ainsi accéder facilement à la trémie centrale (20) ou au dispositif microgranulateur (21) dans la position de transport grâce à des passerelles (non représentées) disposées entre deux éléments semeurs (6c, 6d ; 6e, 6f). L'espace dégagé au-dessus de l'ouverture (26) permet, d'une manière particulièrement avantageuse, à l'utilisateur d'approvisionner directement ladite trémie centrale (20) en granulés à l'aide de "big-bag". Un "big-bag" étant un grand récipient souple permettant de contenir une grande quantité de produit en vrac. Un tel récipient souple contient généralement 500 kg de produit en vrac. Le remplissage de ladite trémie centrale (20) est donc très rapide. A cet effet l'utilisateur coulisse simplement le couvercle (27) de la trémie centrale (20) vers l'avant. Il est aussi possible de remplir ladite trémie centrale (20) par l'ouverture (26) à l'aide d'une vis de chargement (non représentée).

A l'appui de la figure 2, on remarque que le repliage des tronçons latéraux (16) vers le haut n'est pas suffisant pour réduire l'encombrement en largeur dudit semoir (1). En effet, des éléments semeur (6) se trouvent encore au-delà du gabarit routier admissible. La largeur maximale de 3 mètres étant approximativement la largeur de ladite trémie centrale (20).

Selon une autre caractéristique importante de l'invention, ledit tronçon central (15) comporte de part et d'autre une extrémité coulissante (23) afin de réduire l'encombrement en largeur du semoir (1). Ledit tronçon central (15) et les extrémités coulissantes (23) forment avantageusement une poutre télescopique. Chaque extrémité coulissante (23) supporte deux éléments semeur (6b, 6c ; 6f, 6g). Cette fonction permet de réduire la largeur du semoir (1) pour le transport. Lors du transport, lesdites extrémités coulissantes (23) sont rétractées dans ledit tronçon central (15).

Lorsque les extrémités coulissantes (23) sont rétractées dans ledit tronçon central (15), les éléments semeurs (6c, 6b, 6f, 6g) se sont rapprochés des éléments semeur (6d, 6e). On peut encore déduire de la figure 2 que les éléments semeur (6b, 6g) sont encore disposés au-delà de ladite trémie centrale (20). Par conséquent pour réduire au maximum la largeur du semoir (1) pour le transport, les extrémités coulissantes (23) sont avantageusement formées d'une première extension (24) et d'une seconde extension (25). La première extension (24) est destinée à coulisser dans ledit tronçon central (15) alors que ladite seconde extension (25) est destinée à coulisser dans ladite première extension (24). Les sections carrées de la première et seconde extension (24, 25) et de l'extrémité coulissante (23) sont adaptées pour permettre un tel coulissement. La section transversale dudit tronçon central (15) est plus grande que la section transversale de ladite première extension (24). La section transversale de la seconde extension (25) est plus petite que celle de la première extension (24). La poutre transversale (7) est donc une poutre télescopique double. Sur les extrémités coulissantes (23), les éléments semeurs (6b, 6c, 6f, 6g) sont répartis de manière à ce que chaque première extension (24) et chaque seconde extension (25) supporte un élément semeur (6b, 6c, 6f, 6g). Le coulissement supplémentaire de ladite seconde extension (25) dans ladite première extension (24) permet de ramener au maximum les éléments semeur (6c, 6f) vers le centre du semoir (1). Ainsi, l'encombrement en largeur du semoir ne dépasse plus les 3 mètres admissibles pour le déplacement sur les routes. La figure 3 représente le semoir monograine (1) dans la position de transport lorsque les tronçons latéraux (16) sont repliés et lorsque les extrémités coulissantes (23) sont rétractées au maximum. Les éléments semeur (6b, 6g) sont rapprochés au maximum des éléments semeur (6c, 6f).

Dans l'exemple de réalisation de la figure 3, représentant une vue de l'arrière du semoir (1) dans la position de transport où les tronçons latéraux (16) avec leur élément semeur respectif (6a, 6h) sont repliés grâce audit mécanisme d'articulation (17). Les éléments semeur (6a, 6h) sont disposés partiellement au-dessus de ladite trémie centrale (20) et dans le voisinage d'un angle arrière. Les tronçons latéraux (16) sont sensiblement parallèle audit tronçon central (15) et sont placés partiellement au-dessus dudit tronçon central (15). Les éléments semeur (6a, 6h) sont placés approximativement au-dessus des éléments semeur (6b, 6g) solidaire de la seconde extension (25).

Le mécanisme d'articulation (17) est conformé de telle sorte que la partie supérieure des éléments semeur (6a, 6h), lors du transport, arrive au niveau de la cabine du tracteur (3). Il est donc possible d'emprunter les routes et de passer sans danger sous des obstacles tels que des ponts ou des portes. Ceci facilite aussi le remisage dudit semoir (1) en hiver.

Dans l'exemple de réalisation représenté sur les figures, il s'agit d'un semoir avec terrage à l'américaine. Ainsi, le dispositif de dosage (11) est disposé au-dessus du dispositif d'implantation de la semence dans le sol (12). L'encombrement en hauteur de cet élément semeur (6) est donc plus important que l'encombrement en hauteur d'un élément semeur avec terrage à l'européenne où la distribution des graines se fait plutôt au ras du sol.

Pour permettre à l'utilisateur d'ensemencer une grande surface sans approvisionnement desdites trémies individuelles (10) et de ladite trémie centrale (20), celles-ci disposent d'une grande capacité de stockage. Dans un autre exemple de réalisation non représenté, la trémie centrale (20) contient de la semence destinée à approvisionner les différentes trémies individuelles (10). Ceci permet d'augmenter considérablement la capacité de stockage de semence et donc d'augmenter la surface ensemencée avec un seul remplissage. D'après les figures, on constate que la trémie centrale (20) dispose d'une grande capacité de stockage. La hauteur maximum de celle-ci arrive approximativement au niveau de la partie inférieure des éléments semeur (6a, 6h). On remarque sur les figures que les côtés supérieurs de ladite trémie centrale (20) sont dégagés ce qui permet d'augmenter encore quelque peu sa hauteur donc sa capacité. Ces dégagements effectués sur la trémie centrale (20) évitent aussi les interférences avec lesdits éléments semeur (6a, 6h).

Chaque semoir (1) est également muni d'un équipement de traçage (non représenté) pour matérialiser un repère sur le sol. Ce repère a pour rôle de guider l'utilisateur lors du prochain passage. Cet équipement de traçage est repliable pour le transport afin de limiter la largeur et la hauteur de transport. Un tel repliage est déjà connu par l'homme de l'art, il ne sera donc pas décrit davantage.

Il est bien évident que l'invention n'est pas limitée au mode de réalisation décrit ci-dessus et représenté sur les dessins annexés. Des modifications restent possibles, notamment en ce qui concerne la constitution ou le nombre des divers éléments ou par substitution d'équivalents techniques, sans pour autant sortir du domaine de protection tel qu'il est défini dans les revendications.

## Revendications

1. Semoir monograine huit rangs (1) avec un châssis (4) comportant :
- une poutre transversale (7) sensiblement horizontale sur laquelle sont répartis en travail de manière régulière huit éléments semeur (6), ladite poutre transversale (7) étant composée :
■ d'un tronçon central (15) solidaire dudit châssis (4) et supportant au moins deux éléments semeur (6b à 6g), et
■ de deux tronçons latéraux (16) disposés de part et d'autre dudit tronçon central (15) dans une position de travail, chaque tronçon latéral (16) supportant au moins un élément semeur (6a, 6h) et étant destiné à être replié vers le haut dans une position de transport au moyen d'un mécanisme d'articulation (17) ;
et
- une trémie centrale (20) présentant une ouverture (26) vers le haut et une largeur limitée par le gabarit routier, ladite trémie centrale (20) étant disposée transversalement sur ledit châssis (4) ;
***caractérisé par le fait que*** dans la position de transport, lesdits éléments semeur (6a, 6h) solidaire desdits tronçons latéraux (16) sont disposés au moins partiellement de part et d'autre de ladite ouverture (26) pour libérer l'espace et accéder à ladite trémie centrale (20).

2. Semoir selon la revendication 1, ***caractérisé par le fait que*** dans la position de transport, lesdits éléments semeur (6a, 6h) solidaire des tronçons latéraux (16) sont disposés partiellement au-dessus de ladite trémie centrale (20) dans le voisinage d'un angle arrière.

3. Semoir selon la revendication 1 ou 2, ***caractérisé par le fait que*** l'ouverture (26) de ladite trémie centrale (20) correspond sensiblement à l'écartement entre lesdits éléments semeur (6a, 6h) dans la positon de transport, permettant un approvisionnement par de grands récipients souples.

4. Semoir selon l'une quelconque des revendications 1 à 3, ***caractérisé par le fait que*** ledit tronçon central (15) comporte au moins une extrémité coulissante (23) destinée à former une poutre télescopique, ladite(lesdites) extrémité(s) coulissante(s) (23) supporte(nt) deux éléments semeur (6b, 6c, 6f, 6g) et étant susceptible(s) d'être rétractée(s) dans ledit tronçon central (15) pour le transport.

5. Semoir selon la revendication 4, ***caractérisé par le fait que*** ledit élément semeur (6a, 6h) solidaire d'un tronçon latéral (16) est disposé partiellement au-dessus de l'élément semeur (6b, 6c, 6f, 6g) solidaire d'une extrémité coulissante respective (23) dans la position de transport.

6. Semoir selon la revendication 4 ou 5, ***caractérisé par le fait que*** chaque extrémité coulissante (23) comporte une première extension (24) et une deuxième extension (25) et que chaque extension (24, 25) supporte un élément semeur respectif (6b, 6c, 6f, 6g).

7. Semoir selon la revendication 6, ***caractérisé par le fait que*** dans la position de transport, lesdites extensions (24, 25) sont rétractées au maximum de manière à réduire l'encombrement en largeur du semoir (1), lesdits éléments semeur (6b, 6c, 6f, 6g) étant rapprochés au maximum des éléments semeur (6d, 6e) solidaire dudit tronçon central (15).

8. Semoir selon l'une quelconque des revendications 1 à 7, ***caractérisé par le fait que*** ledit semoir (1) comporte huit éléments semeur (6a, 6b, 6c, 6d, 6e, 6f, 6g, 6h).
